# EUROPEAN PATENT SPECIFICATION

(11) **EP 0 755 485 B1**
(45) Date of publication and mention of the grant of the patent: **02.06.1999**
(21) Application number: 95914972.5
(22) Date of filing: 31.03.1995
(51) Int. Cl.: F02M 69/46, F02M 37/22, B01D 35/02

(54) **DISCRETE FILTER MOUNTED IN FUEL RAIL**
IN EINE KRAFTSTOFFVERTEILERLEISTE ENGEBAUTER GETRENNTER FILTER
FILTRE DISCRET MONTE DANS UNE RAMPE DE CARBURANT

(30) Priority: 13.04.1994 US 226906
(43) Date of publication of application: 29.01.1997
(73) Proprietor: Siemens Automotive Corporation, Auburn Hills, Michigan 48326-2980 (US)
(72) Inventor: ROBINSON, Barry, S., Newport News, VA 23606 (US)
(74) Representative: Allen, Derek
(86) International application number: PCT/US95/03958
(87) International publication number: WO 95/28562

(56) References cited:
- EP-A- 0 408 377
- EP-A- 0 473 558
- DE-A- 3 536 814
- DE-A- 3 632 417
- DE-U- 9 302 824
- FR-A- 1 575 877
- FR-A- 2 665 732
- US-A- 3 788 287
- US-A- 4 279 746
- US-A- 5 118 417
- PATENT ABSTRACTS OF JAPAN vol. 12 no. 445 (M-767) [3292] ,22 November 1988 & JP,A,63 176654 (NIPPON DENSO) 20 July 1988,

## Description

### Field of the Invention

This invention relates generally to a fuel system of an internal combustion engine, and more specifically to a fuel rail assembly that contains electrically operated fuel injectors and a filter for filtering foreign material from fuel upon entering the fuel rail assembly so that the foreign material does not reach the internal mechanism of the fuel injectors where it may impair proper performance.

### Background and Summary of the Invention

It is known to use filter screens in fuel injection systems for filtering foreign material from the fuel so that such foreign material does not reach vital parts of the fuel rail assembly. The potentially adverse consequences of particular material entering a fuel injector, or other operative component of a fuel rail assembly, have been documented and need not be repeated here. It is also known to use cartridge type fuel filter elements in fuel systems.

FR-A-1 575 877 teaches a filter that is mounted in a fluid system wherein the filter housing is not applicable to fuel system for an internal contustin engine. The interior volume of the filter is modified by the teachings in this patent.

EP-A-408 377 teaches a disposable filter assembly.

A further known fuel delivery system is disclosed in JP-A-63 176654, which teaches a system in which fuel is passed through a fuel filter to a fuel rail. After flowing through the fuel rail, a pressure control valve regulates the fuel pressure and operates to return excess fuel to the fuel tank through an outlet pipe. The fuel pressure regulator is at the end of the fuel pipe and returns excess fuel back to the tank. The fuel tank filter of the system comprises a tubular filter element, disposed in a housing which includes a plurality of venting orifices formed in an outer diameter of the housing. The fuel filter is arranged such that fuel delivered by the fuel rail passes through a central passage of the tubular filter to a fuel delivery pipe through the venting orifices via the filter.

Yet a further known fuel delivery system is disclosed in DE-A-3536814, which features a fuel filter assembly comprising a filter cartridge with a tubular filter media having a central passage, and a filter housing having a chamber for receiving said cartridge. Said filter cartridge includes an imperforate wall as an integral part and is arranged to close one axial end of said central passage.

Such an arrangement of a fuel filter addresses a technical problem of providing a tubular fuel filter wherein removal and replacement of the filter within the fuel filter assembly is facilitated whilst still providing efficient fuel filtration. The technical problem is also addressed by the present invention.

According to the present invention there is provided a fuel rail assembly for delivering and filtering pressurized fuel to fuel injectors coupled to said fuel rail assembly, said fuel rail assembly comprising, a fuel filter assembly and a fuel rail, wherein said fuel filter assembly has a filter cartridge having a tubular filter media defined by an outer diameter surface and an inner diameter surface, which inner diameter surface further defines a central passage, and an imperforate wall which forms an integral part of said filter cartridge and is arranged to close one axial end of said central passage and an adjoining annular axial end of said media, said fuel rail including a cylindrical socket which defines a first chamber in which first chamber said fuel filter assembly is operatively coupled to said fuel rail, wherein fuel fed to said fuel rail via said fuel filter assembly is arranged to flow between said inner and outer diameter surfaces of said filter cartridge, characterised in that, said fuel filter assembly further comprises a filter housing having a second chamber in which said filter cartridge is disposed and wherein another axial end of said filter cartridge, distal to said one axial end closed by said imperforate wall, is closed by a substantially fluid tight contact with a wall of said filter housing, whereby the fuel is arranged to flow from an inlet of said filter housing, to an outlet of said filter housing, via said central passage and a generally annular space defined between said outer diameter surface of said filter cartridge and said filter housing.

According to a further aspect of the present invention there is provided a fuel rail assembly wherein said filter housing is comprised of two mutually engaging parts, which parts are arranged to define said second chamber, thereby facilitating installation of said further cartridge.

According to yet a further aspect of the present invention there is provided a fuel rail assembly wherein said filter housing has a plurality of substantially crushable projections disposed on said filter housing thereby facilitating retention of said filter housing within said cylindrical socket.

According to yet a further aspect of the present invention there is provided a fuel rail assembly wherein said inlet of said filter housing is an integrally formed inlet connector fitting portion formed in a first of the two mutually engaging parts for engaging a fuel delivery means for conveying the fuel to said filter assembly, and an outlet is formed with a second of the two mutually engaging parts.

The incorporation of a tubular filter cartridge in its own socket in a fuel rail provides a number of advantageous features. These features include: the integration of a tubular filter cartridge into a cylindrical cartridge housing that separably mounts in its own socket in the fuel rail to allow for removal and replacement; the incorporation of certain features on the exterior of the cartridge housing to provide a secure fit of the housing within the fuel rail socket; the incorporation of certain features that provide a convenient flow path for the fuel being filtered; and fluid-tight joints between the cartridge housing and the socket. The cartridge housing may include an inlet connector fitting (an example being a so-called quick connect fitting) that is integrally formed with the cartridge and provides for connection of a fuel supply conduit to the fuel rail assembly.

Further features and advantages will be seen from the following detailed description of a presently preferred embodiment. Claims and drawings accompany the description, and the drawings and description disclose the best mode contemplated at this time for carrying our the invention.

### Brief Description of the Drawings

Fig. 1 is a longitudinal cross-section view through an inlet end portion of a first embodiment of fuel rail assembly embodying principles of the present invention.

Fig. 2 is a longitudinal cross-sectional view through an inlet end portion of an embodiment of the fuel rail assembly embodying principles of the present invention.

### Description of the Preferred Embodiment

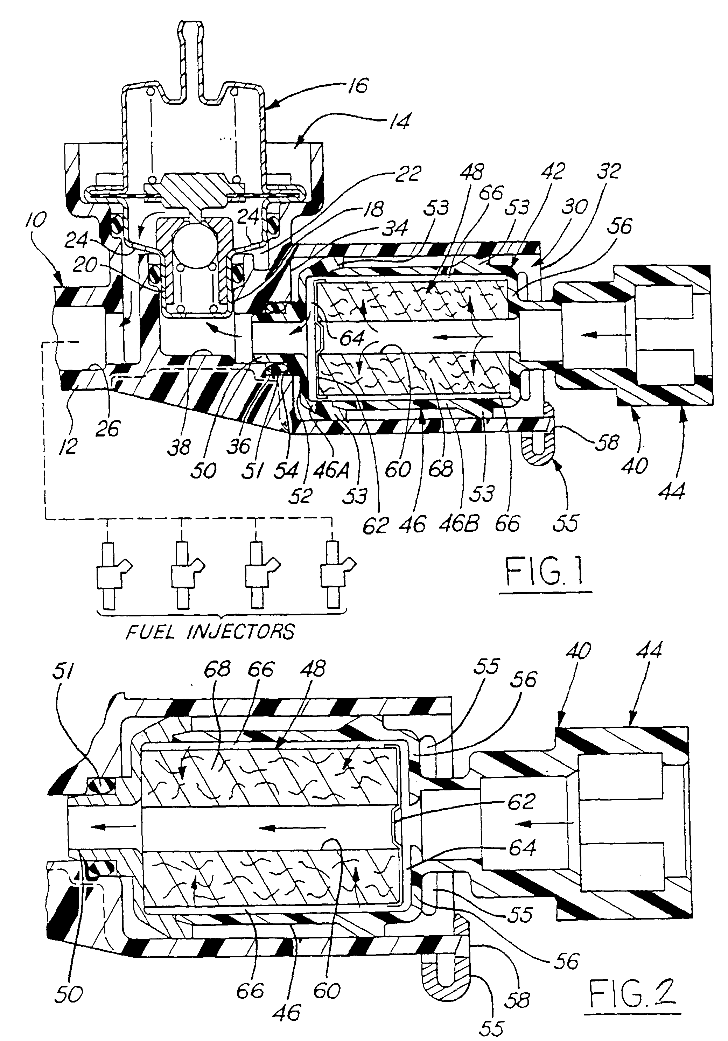

Fig. 1 shows a fuel rail assembly 10 comprising a fuel rail 12 that serves fuel to a number of electrically operated fuel injectors at various locations along its length. The fuel injectors are not shown in detail and are represented only schematically. Fuel rail 12 may be constructed in any conventional way, from metal parts assembled together, or from molded composite material as shown by the example in the drawings. Fuel rail 12 includes a first integral cylindrical socket 14 whose axis is transverse to the length of the fuel rail and within which a fuel pressure regulator 16 is coaxially disposed and in a fluid-tight manner. This fuel pressure regulator is like that disclosed in EP-A-636 785, published 01.02.1995, and details may be obtained from that file. Socket 14 comprises a series of steps shaped for cooperation with the housing of regulator 16. The bottom of socket 14 is shaped to comprise an inlet 18 with which a tubular inlet port 20 of regulator 16 is telescopically engaged in a sealed manner. The socket further comprises an outlet or annular well 22 that is disposed in surrounding relation to, but sealed off from, inlet 18. Fuel that passed through inlet port 20 into an interior fuel chamber of regulator 16 is pressure regulated by the internal mechanism of the regulator and this interior fuel chamber communicated with well 22 by several through-apertures 24 in the wall of the regulator housing. Well 22 in turn leads to a main fuel passage 26 that extends lengthwise through the fuel rail to serve the fuel injectors. The pressure regulator's internal mechanism includes a relief feature that relieves excess pressure back through inlet port 20 so that the regulator does not require a separate fuel return conduit extending back to the tank.

At its fuel inlet end, fuel rail 12 comprises a second integral cylindrical socket 30 that is coaxial with the length of the fuel rail. Socket 30 is open at one axial end 32 and has two internal shoulders 34, 36 at the opposite axial end for successively reducing the I.D. of the socket at that latter location, but leaving that end open for communication through a short passage 38 to which inlet port 20 of regulator 16 is communicated.

A combination inlet connector fitting-filter cartridge and housing assembly 40 is disposed in association with socket 30 for conveying fuel from a fuel supply conduit (not shown) to the pressure regulator inlet port and filtering the fuel in the process. The filter cartridge and housing portion 42 of assembly 40 is disposed within socket 30 while the inlet connector fitting portion 44 is disposed external to the socket where it is available for connection with a mating connector (not shown) on the fuel supply conduit that delivers fuel to the fuel rail assembly.

Portion 42 comprises a cylindrically shaped housing 46 within which a tubular filter cartridge 48 is disposed. Housing 46 is preferably fabricated from molded plastic parts that are joined together in a sealed manner. In Fig. 1, there are two such parts 46A and 46B. Part 46B forms a majority of housing 46, and it includes inlet connector fitting portion 44 as an integral part thereof such that the inlet connector fitting is integrally formed at one end of part 46B during the process of fabricating the latter. The opposite end of part 46B comes together with a mating end of part 46A in a fluid-tight joint that may be created in any suitable manner such as by sonic welding. The opposite end of part 46A has a neck 50 including successive shoulders 52, 54 that fit complementary to the interior end of socket 30 that comprises the counterbores that form shoulders 34, 36. An O-ring seal 51 is disposed around neck 50 to provide a fluid-tight seal of the neck with the inner end of socket 30 that receives the neck.

The cartridge housing wall is imperforate except for the entrance where connector fitting portion 44 joins it and for the exit formed by neck 50. The housing sidewall's O.D. also includes several projections 53 that are slightly crushable to allow the housing to have a secure fit when inserted into socket 30 through open end 32. After the cartridge housing portion has been fully inserted into socket 30, a retention clip 55 is engaged with the socket wall proximate open end 32 to hold assembly 40 in place by engaging an end wall 56 of the cartridge housing at locations that are to either side of where connector fitting portion 44 integrally joins with end wall 56. The retention clip has a feature 58 that causes it to be self-retaining on the edge of open end 32 when fully in place. Details of the retention clip and how it is associated with the socket end are like the embodiment shown in US-A 5 433 241, published 18.07.1995 and entitled 'Fuel Pressure Regulator/Fuel Filter Module'.

Filter cartridge 48 is tubular in shape and disposed cordially within the cartridge housing such that one axial end of the filter cartridge is disposed against and joined with the interior face of end wall 56 so that a central passage 60 through the filter cartridge aligns with inlet connector fitting portion 44. The opposite axial end of cartridge 48, including passage 60, is covered by an imperforate cap 62 that is axially inwardly of neck 50 to provide a space 64. The O.D. of the cartridge is less than the I.D. of the cartridge housing so that there is an annular space 66 surrounding the sidewall of the cartridge. Fuel that enters from the inlet connector fitting passes into passage 60 and then radially outwardly through filter media 68 to space 66. From there, the fuel passes to space 64, through neck 50 and passage 38, to the fuel pressure regulator inlet port 20. Media 68 is effective to filter certain particular material from the fuel as it passes through.

Assembly 40 is serviceable as a unit by disconnecting the fuel supply tube from inlet connector fitting portion 44, removing clip 55, and extracting the assembly from socket 30.

Fig. 2 shows an embodiment like Fig.1, and like components in the two Figs. are identified by like reference numerals. Fig. 2 differs from Fig. 1 in that the filter cartridge 48 is mounted in an axially opposite configuration from Fig. 1, meaning that the filter cartridge is potted on the annular axial wall of housing 46 from which neck 50 extends and the end that is closed by cover 62 confronts wall 56 to place the space 64 proximate the latter wall. Thus, fuel enters space 64 from the inlet connector fitting and passes to space 66 so that flow through media 68 is from its O.D. to its I.D. where it enters passage 60 from which it flows directly out through neck 50. For the illustrated tubular design, such radially inward flow enables a larger surface area to be presented to the unfiltered fuel than does radially outward flow.

While a presently preferred embodiment has been illustrated and described, principles are applicable to any embodiment falling within the scope of the following claims.

## Claims

1. A fuel rail assembly (10) for delivering and filtering pressurized fuel to fuel injectors coupled to said fuel rail assembly,
said fuel rail assembly comprising, a fuel filter assembly (40) and a fuel rail (12), wherein said fuel filter assembly (40) has a filter cartridge (48) having a tubular filter media (68) defined by an outer diameter surface and an inner diameter surface, which inner diameter surface further defines a central passage (60), and an imperforate wall (62) which forms an integral part of said filter cartridge and is arranged to close one axial end of said central passage (60) and an adjoining annular axial end of said media,
said fuel rail (12) including a cylindrical socket (30) which defines a first chamber in which first chamber said fuel filter assembly (40) is operatively coupled to said fuel rail (12), wherein fuel fed to said fuel rail (12) via said fuel filter assembly (40) is arranged to flow between said inner and outer diameter surfaces of said filter cartridge (48),
characterised in that, said fuel filter assembly (40) further comprises a filter housing (46) having a second chamber in which said filter cartridge (48) is disposed and wherein another axial end of said filter cartridge (48), distal to said one axial end closed by said imperforate wall (62), is closed by a substantially fluid tight contact with a wall of said filter housing, whereby the fuel is arranged to flow from an inlet of said filter housing, to an outlet of said filter housing, via said central passage (60) and a generally annular space (66) defined between said outer diameter surface of said filter cartridge and said filter housing (46).

2. A fuel rail assembly as claimed in any preceding Claim, wherein said filter housing (46) is comprised of two mutually engaging parts (46A, 46B), which parts (46A, 46B) are arranged to define said second chamber, thereby facilitating installation of said filter cartridge (48).

3. A fuel rail assembly as claimed in Claims 1 or 2, wherein said filter housing (46) has a plurality of substantially crushable projections (53) disposed on said filter housing thereby facilitating retention of said filter housing (46) within said cylindrical socket (30).

4. A fuel rail assembly as claimed in any preceding Claim, wherein said inlet of said filter housing (46) is an integrally formed inlet connector fitting portion (44) formed in a first of the two mutually engaging parts (46B) for engaging a fuel delivery means for conveying the fuel to said filter assembly, and an outlet is formed with a second of the two mutually engaging parts (46A).

## Patentansprüche

1. Kraftstoffverteileranordnung (10) zum Zuführen und Filtern von unter Druck stehendem Kraftstoff zu Kraftstoffeinspritzdüsen, die mit der Kraftstoffverteileranordnung verbunden sind,
wobei die Kraftstoffverteileranordnung eine Kraftstoffilteranordnung (40) und eine Kraftstoffverteilerleiste (12) aufweist, von denen die Kraftstoffilteranordnung (40) eine Filterpatrone (48) mit einem rohrförmigen Filtermedium (68) besitzt, das von einer äußeren Umfangsfläche und einer inneren Umfangsfläche gebildet wird, von denen die innere Umfangsfläche einen zentralen Kanal (60) bildet, sowie eine undurchlässige Wand (62), die einen integralen Bestandteil der Filterpatrone bildet und so angeordnet ist, daß sie ein axiales Ende des zentralen Kanales (60) verschließt und an einem ringförmigen axialen Ende des Filtermediums angrenzt,
wobei die Kraftstoffverteilerleiste (12) eine zylindrische Aufnahme (30) enthält, welche eine erste Kammer bildet, in der die Kraftstoffilteranordnung (40) mit der Kraftstoffverteilerleiste (12) funktionsmäßig verbunden ist, wobei der Kraftstoffverteilerleiste (12) über die Kraftstoffilteranordnung (40) zugeführter Kraftstoff zwischen der inneren und äußeren Umfangsfläche der Filterpatrone (48) fließt,
dadurch gekennzeichnet, daß die Kraftstoffilteranordnung (40) ferner ein Filtergehäuse (46) mit einer zweiten Kammer aufweist, in der die Filterpatrone (48) angeordnet ist, wobei ein anderes axiales Ende der Filterpatrone (48), das zu dem von der undurchlässigen Wand (62) verschlossenen axialen Ende entfernt ist, durch einen im wesentlichen strömungsmitteldichten Kontakt mit einer Wand des Filtergehäuses verschlossen ist, so daß der Kraftstoff von einem Einlaß des Filtergehäuses zu einem Auslaß des Filtergehäuses über den zentralen Kanal (60) und einen ungefähr ringförmigen Raum (66) fließt, der zwischen der äußeren Umfangsfläche der Filterpatrone und dem Filtergehäuse (46) gebildet ist.

2. Kraftstoffverteileranordnung nach Anspruch 1, bei der das Filtergehäuse (46) aus zwei aneinander angreifenden Teilen (46A, 46B) besteht, die so angeordnet sind, daß sie eine zweite Kammer bilden, um den Einbau der Filterpatrone (48) zu erleichtern.

3. Kraftstoffverteileranordnung nach Anspruch 1 oder 2, bei der das Filtergehäuse (46) mehrere im wesentlichen zusammendrückbare Vorsprünge (53) aufweist, die an dem Filtergehäuse angeordnet sind, wodurch die Halterung des Filtergehäuses (46) in der zylindrischen Aufnahme (30) erleichtert wird.

4. Kraftstoffverteileranordnung nach einem der vorhergehenden Ansprüche, bei der der Einlaß des Filtergehäuses (46) ein einstückig ausgebildeter Einlaß-Verbinderanschluß-Abschnitt (44) ist, der in einem ersten der beiden aneinander angreifenden Teile (46B) gebildet ist, um mit einer Kraftstoffabgabeeinrichtung zum Zuführen des Kraftstoffes zu der Filteranordnung in Eingriff zu gelangen, und ein Auslaß an dem zweiten der beiden aneinander angreifenden Teile (46A) gebildet ist.

## Revendications

1. Ensemble de rail de carburant (10) destiné à amener et à filtrer du carburant sous pression à des injecteurs de carburant couplé audit ensemble de rail de carburant,
ledit ensemble de rail de carburant comprenant, un ensemble de filtre de carburant (40) et un rail de carburant (12), dans lequel ledit ensemble de filtre de carburant (40) comprend une cartouche de filtre (48) qui contient un matériau filtrant tubulaire (68) limité par une surface de diamètre extérieur et une surface de diamètre intérieur, laquelle surface de diamètre intérieur définit, en outre, un passage central (60), et une paroi non perforée (62) qui fait partie intégrante de ladite cartouche filtrante et qui est disposée pour former une première extrémité axiale dudit passage central (60) et une extrémité axiale annulaire adjacente dudit matériau,
ledit rail de carburant (12) incluant une douille cylindrique (30) qui définit une première chambre et dans laquelle première chambre ledit ensemble de filtre de carburant (40) est couplé, en fonctionnement, audit rail de carburant (12), dans lequel le carburant amené audit rail de carburant (12) via ledit ensemble de filtre de carburant (40) est amené à s'écouler entre lesdites surface de diamètres intérieur et extérieur de ladite cartouche filtrante (48),
caractérisé en ce que ledit ensemble de filtre de carburant (40) comprend, en outre, un logement de filtre (46) ayant une seconde chambre dans laquelle est disposée ladite cartouche filtrante (48), et dans lequel une autre extrémité axiale de ladite cartouche filtrante (48), distante de ladite première extrémité axiale fermée par ladite paroi non perforée (62), est fermée par un contact sensiblement étanche au fluide avec une paroi dudit logement de filtre, de sorte que le carburant est amené à s'écouler d'une entrée dudit logement de filtre à une sortie dudit logement de filtre, via ledit passage central (60) et un espace globalement annulaire (66) défini entre ladite surface de diamètre extérieur de ladite cartouche filtrante et ledit logement de filtre (46).

2. Ensemble de rail de carburant selon la revendication précédente, dans lequel ledit logement de filtre (46) se compose de deux parties s'engageant mutuellement (46A, 46B), lesquelles parties (46A, 46B) sont agencées pour définir ladite seconde chambre, facilitant ainsi l'installation de ladite cartouche filtrante (48).

3. Ensemble de rail de carburant selon la revendication 1 ou 2, dans lequel ledit logement de filtre (46) présente une pluralité de protubérances pouvant être sensiblement écrasées (53) qui sont disposées sur ledit logement de filtre, facilitant ainsi la rétention dudit logement de filtre (46) au sein de ladite douille cylindrique (30).

4. Ensemble de rail de carburant selon l'une quelconque des revendications précédentes, dans lequel ladite entrée dudit logement de filtre (46) est une partie de raccord de connecteur d'entrée formée d'un seul tenant (44) et formée dans une première des deux parties s'engageant mutuellement (46B) pour engager un moyen d'amenée de carburant permettant d'acheminer le carburant audit ensemble de filtre, et une sortie est formée avec une seconde des deux parties s'engageant mutuellement (46A).
